**Europäisches Patentamt**

(19) **European Patent Office**

**Office européen des brevets**

(11) Veröffentlichungsnummer: **0 021 302**
**B1**

(12) # EUROPÄISCHE PATENTSCHRIFT

(45) Veröffentlichungstag der Patentschrift:
25.05.83

(21) Anmeldenummer: 80103341.6

(22) Anmeldetag: **16.06.80**

(51) Int. Cl.³: **F 03 G 7/04**

(54) Aus einer geothermischen Wärmequelle versorgtes Wärmekraftwerk.

(30) Priorität: **03.07.79 IT 2405779**

(43) Veröffentlichungstag der Anmeldung:
**07.01.81 Patentblatt 81/1**

(45) Bekanntmachung des Hinweises auf die Patenterteilung:
**25.05.83 Patentblatt 83/21**

(84) Benannte Vertragsstaaten:
**AT BE CH DE FR GB LI LU NL SE**

(56) Entgegenhaltungen:
**BE-A-875 277**
**FR-A-956 062**
**GB-A-824 492**
**US-A-3 986 362**
**US-A-3 988 895**
**US-A-4 089 175**
**MECHANICAL ENGINEERING, Band 98, Nr. 8, August 1976, New York, US, E. F. WEHLAGE: »Geothermal energy needed: effective heat transfer equipment«, Seiten 27—33**

(73) Patentinhaber: **Santi, Giunio Guido, Via Fratelli Gabba, 6, I-20100-Milano (IT)**

(72) Erfinder: **Santi, Giunio Guido, Via Fratelli Gabba, 6, I-20100-Milano (IT)**

(74) Vertreter: **Jaumann, Paolo, Studio Consulenza Brevetti Jaumann Piazza Castello, 2, I-20121-Milano (IT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Aus einer geothermischen Wärmequelle versorgtes Wärmekraftwerk

Die Erfindung betrifft ein aus einer geothermischen Wärmequelle versorgtes Wärmekraftwerk, worin ein im Untergrund erhitztes, erstes Medium zumindest einer leistungsabgebenden Maschine Energie abgibt.

Bekannten Wärmekraftwerken dieser Art, wie sie z. B. im Artikel von E. H. Wehlage »Geothermal energy needed: effective heat transfer equipment«, veröffentlicht in »Mechanical Engineering«, Band 98, Nr. 8, Seiten 27–33, August 1976, New York/USA, beschrieben sind, liegt im wesentlichen der Gedanke zugrunde, das vom Untergrund kommende Medium derart zu behandeln, daß dieses entweder direkt (siehe z. B. auch US-A-4 089 175) oder über besondere Wärmeaustauscher (siehe z. B. ebenfalls US-A-3 986 362) einem weiteren Medium Energie abgibt, oder unmittelbar als Arbeitsmedium für die leistungsabgebenden Maschinen verwendet wird.

Dabei ergeben sich bei solchen Anwendungen u. a. nachstehende schwerwiegende Probleme, die sorgfältige und fast immer verwickelte und aufwendige Lösungen erfordern:

entweder sind Dampfquellen im Untergrund aufzufinden, so daß damit der Aufstellungsort des Kraftwerkes bedingt ist, oder ist das Arbeitsmedium einerseits über entsprechende Wärmeaustauscher zu erhitzen und andererseits auf die der Luft- und Wasser-Außentemperatur entsprechende Temperatur niederzuschlagen, wobei die erforderlichen Wärmeaustauscher, wenn sie über eine gewisse Leistung hinaus auszulegen sind, unzulässige Abmessungen annehmen können. Im Vergleich zu den Temperaturwerten des Arbeitsmediums und zu dessen Beschaffenheit sind die erzielbaren spezifischen Leistungen jedenfalls verhältnismäßig gering.

Die vorliegende Erfindung geht nun gerade von diesen Überlegungen aus und setzt sich dabei zum Ziel, eine Anlage vorzuschlagen, mit welcher alle oben erwähnten Probleme gelöst oder zumindest deren Schwierigkeiten gemindert werden können. Im einzelnen verfolgt sie dabei nachstehende Zwecke:

Die Anlage soll in einem Gebiet aufstellbar sein, in welchem das Bedürfnis besteht, nutzbare Energie zu erzeugen, und nicht zwangsweise dort, wo geothermische Energie wegen natürlicher Ausströmung eines fließfähigen Mediums aus der Erdkruste zur Verfügung steht; daher soll nach Energie dort nachgesucht werden, wo diese auch gefordert wird, damit schwerwiegende Unkosten für eine Energiefortleitung vermieden werden;
das Arbeitsmedium für die leistungsabgebenden Maschinen soll als wesentliche Eigenschaft die Möglichkeit bieten, in Anbetracht eventueller Verluste der Anlage wiederergänzbar zu sein;
das Arbeitsmedium soll begrenzte Abmessungen der Wärmeaustauscher ermöglichen;
das Arbeitsmedium soll im Vergleich zu den Wärmewerten der verfügbaren Energie hohe Werte der erzielbaren Leistung zulassen;
der Kessel soll im Aufbau einfach und sowohl im Aufbau als auch im Betrieb wirtschaftlich sein und insbesondere den höchstmöglichen Wärmeaustausch ermöglichen, damit seine Abmessungen genügend klein gehalten werden können;
der Kondensator soll die gleichen Eigenschaften aufweisen, wie sie für den Kessel genannt worden sind, so daß eine Verminderung des Raumbedarfes gewährleistet wird;
die Temperatur am Ausgang des Kessels soll auf die höchstmöglichen Werte gebracht werden, damit die Leistungsabgabe je Gewichtseinheit des verwendeten Mediums erhöht werden kann;
die Temperatur des Mediums am Auslaß der leistungsabgebenden Maschine (Turbine) soll auf die tiefstmöglichen Werte, auch unter die Umgebungstemperatur des Kühlwassers gebracht werden, zwecks Erhöhung des nutzbaren Druckgefälles und bestmöglicher Verminderung der für die Rückführung des Arbeitsmediums vom Kondensator zum Kessel erforderlichen Energie, was durch größtmögliche Erhöhung des spezifischen Gewichtes des Kondensators erzielbar ist;
die zur Kälteerzeugung verbrauchte Energie soll von geothermischem Ursprung herrühren;
die im Außenwasser enthaltene Energie soll zweckmäßig ausgenutzt werden.

Zur Lösung der herangezogenen Probleme und zur Erzielung der soeben genannten Zwecke schlägt die Erfindung ein aus einer geothermischen Wärmequelle versorgtes Wärmekraftwerk vor, welches mit zumindest zwei Medien arbeitet, wobei das erste Medium (Wasser) über einen Eingangsschacht in den Untergrund gepumpt wird und nach entsprechender Erhitzung auf die vorgegebene Temperatur über einen Ausgangsschacht zurückfließt und die Übertragung der geothermischen Energie aus dem Untergrund zum Wärmekraftwerk ermöglicht. Gemäß der Erfindung ist das zweite Medium (Arbeitsmedium) Kohlensäure, die durch direkten Kontakt mit dem ersten Medium die darin enthaltene Wärmeenergie aufnimmt und diese über eine oder mehrere Arbeitsmaschinen in mechanische Energie umwandelt; gegebenenfalls erzeugt ein drittes Medium (beispielsweise Ammoniak) in einer Absorptionskühlanlage (wiederum unter Ausnutzung der geothermischen Energie) die zur Herabsetzung der Temperatur und damit des Druckes des zweiten Mediums am Auslaß der letzten Arbeitsmaschine erforderliche Kälte, so daß das vorbestimmte, optimale Druckgefälle zustande kommt.

Im erfindungsgemäßen Wärmekraftwerk wird also die dem Wasser im Untergrund übertragene geothermische Energie dazu genutzt, um das Arbeitsmittel auf den optimalen Temperaturwert zu erhitzen und um gegebenenfalls am Kondensator Kälte mit tiefstmöglichem Niveau über die Absorptionskältemaschine zu erzeugen, damit das nutzbare Druckgefälle ein Maximum erreicht.

Nach der vorliegenden Erfindung arbeitet das Kraftwerk im wesentlichen, wie bereits gesagt, mit zwei oder drei Medien, nämlich:

Oberflächliches Meer- oder Süßwasser als Zwischenmedium (erstes Medium) für die Wärmebehandlungen der Kohlensäure und des Ammoniaks; dieses Wasser wird in den geothermischen Schächten entsprechend erhitzt und durchläuft einen zwischen dem Kraftwerk und den Schächten geschlossen verlaufenden Kreislauf.

Kohlensäure als Haupt-Arbeitsmedium (zweites Medium) für die leistungsabgebenden Maschinen. Die Erhitzung der Kohlensäure am Eingang dieser Maschinen erfolgt durch direkten Kontakt mit dem aus den geothermischen Schächten kommenden Wasser; der thermodynamische Kreisprozeß wird mit einer Anzahl von Zwischenerhitzungen verwirklicht, um die polytropische Expansion an die isothermische Expansion — wegen der offensichtlich daraus ableitbaren Vorteile — möglichst anzugleichen.

Ammoniak als eventuelles Zwischenmedium (drittes Medium) für die Wärmebehandlung der Kohlensäure im Kondensator unter möglichst minimalen Temperatur- und Druckwerten; das Ammoniak arbeitet deswegen in einer Absorptionskühlanlage, weil damit der Leistungsbedarf auf ein Minimum herabgesetzt wird.

Die grundlegenden Richtlinien, wonach sich ein erfindungsgemäßes Wärmekraftwerk von bekannten vergleichbaren Kraftwerken unterscheidet, betreffen hauptsächlich die Verwendung von $CO_2$ als Arbeitsmedium für die leistungsabgebenden Maschinen, außerdem die Anwendung eines thermodynamischen Kreisprozesses mit Druckgefällen unter Wärmeeinführung zwischen aufeinanderfolgenden Gefällen, und überdies die Verwendung einer Absorptionskühlanlage.

Die Verwendung von $CO_2$ als Arbeitsmedium für die leistungsabgebenden Maschinen bietet folgende Vorteile:

$CO_2$ ist in warmen Wasser nur relativ schwerlöslich und daher kann zu deren Erhitzung damit in unmittelbaren Kontakt kommendes Wasser Verwendung finden, so daß eine Wärmeübertragung zwischen in chemischer und physikalischer Einsicht praktisch getrennten Medien entsteht. Auf diese Weise erübrigen sich Wärmeaustauscher im Kessel. Der Kontakt zwischen Wasser und $CO_2$ kann entweder durch Einspritzen von Wasser in die $CO_2$ oder durch Durchblasen von Wasser mit der $CO_2$ verwirklicht werden. Die geringe Wasserlöslichkeit der $CO_2$ erreicht jedenfalls bei den für den Wärmeaustausch vorgesehenen Temperaturen ($>50°C$) vollkommen vernachlässigbare Werte. Selbst wenn eine minimale $CO_2$-Menge vom Wasser in den Untergrund mitgenommen und beim Austritt aus dem Untergrund nicht wiedergewonnen werden sollte, ergäbe sich deswegen kein Problem, zumal die $CO_2$ an Ort und Stelle leicht wiederherstellbar und im Kraftwerk bei Bedarf ergänzbar ist; die Herstellung von $CO_2$ kann tatsächlich mit verschiedenen an sich bekannten Systemen in einfacher und wirtschaftlicher Weise erfolgen.

$CO_2$ weist extrem niedrige Werte der latenten Wärme auf und erfordert daher nur beschränkt ausgedehnte Wärmeaustauschflächen in den Kondensatoren.

$CO_2$ ergibt weitestgehende Anpassungsfähigkeit, da sie entweder, unter Ausnutzung des Kühlmittels bei der Umgebungstemperatur, die Verwirklichung einer extrem einfachen Anlage mit noch zufriedenstellenden spezifischen Leistungen, oder, unter Ausnutzung des Kühlmittels bei unterhalb der Umgebungstemperatur liegenden Temperaturen, die Verwirklichung einer Anlage mit bedeutend erhöhten spezifischen Leistungen ermöglicht.

Die Anwendung eines thermodynamischen Kreisprozesses mit Druckgefällen unter Wärmeeinführung zwischen aufeinanderfolgenden Gefällen schafft günstige Bedingungen für die Ausnutzung und Betriebsweise der Maschinen, wobei die Leistungsabgabewerte, bezogen auf die Durchflußmenge des Arbeitsmediums, gesteigert werden.

Die Verwendung einer Absorptionskühlanlage ermöglicht schließlich eine Erhöhung der spezifischen Leistungsabgabewerte der Maschinen mit vernachlässigbar geringer Einbuße für die zur Kälteerzeugung verbrauchte mechanische Leistung.

Ein Wärmekraftwerk nach der Erfindung besteht im allgemeinen hauptsächlich aus einem oder mehreren Schächtepaaren, einer leistungsabgebenden Hauptanlage, einer eventuellen Absorptionskühlanlage und gegebenenfalls einer Abhitzerückgewinnungsanlage zur Rückgewinnung der Abhitze am Ausgang des Kraftwerkes.

Die Schächte sind in ihrem Aufbau solchen Schächten ähnlich, wie sie zur Ausnutzung von Erdöllagerstätten aufgebaut werden. Das zu erhitzende Wasser wird darin eingeführt, um sodann bei den erforderlichen Temperaturwerten daraus wieder bis an die Oberfläche zurückgeführt zu werden. Jedes Schächtepaar stellt somit sozusagen einen Kessel mit einer Einlaß- und einer Auslaßleitung dar. Diese letztere Leitung wird zweckmäßigerweise mit einer Wärmeisolierung zur Minderung des Wärmeaustausches versehen, wogegen die Geschwindigkeit des Wassers in dieser Leitung derart gewählt ist, daß man zu einem optimalen Kompromiß zwischen Wärmeaustausch und mechanischem Energieverlust kommt.

Die leistungsabgebende Hauptanlage kann an Land, am Meeresspiegel, aber auch am Meeres- oder Seegrund errichtet werden. In dieser Anlage gibt das Warmwasser einen Teil seiner thermischen Energie an die Kohlensäure, durch direkten Kontakt zwischen diesen beiden Medien in entsprechenden Kesseln, ab. Die Kohlensäure im dampfförmigen Zustand wird bei den im Kessel erreichten Druck- und Temperaturwerten über eine oder mehrere hintereinandergeschaltete Arbeitsmaschinen zur Abgabe der geforderten Leistung entspannt. In der zweiten Alternative sind diese Maschinen untereinander derart in Kaskade geschaltet, daß das aus jeder einzelnen Maschine austretende Medium in einem darauffolgenden Kessel bis zur Eingangstemperatur aufwärmbar ist, wobei jeweils Entspannungen mit gleichen Temperaturgefällen und gleichen Druckverhältnissen zwischen Ein- und Ausgangsdruck in jeder Maschine entstehen. Dabei sind die einzelnen Maschinen und Kessel selbstverständlich unter Berücksichtigung der verschiedenen spezifischen Volumina der Kohlensäure in den einzelnen Stufen unterschiedlich auszulegen. Auf diese Weise verwirklicht man zwischen Anfangs- und Enddruck eine Entspannung mit aufeinanderfolgenden Einführungen von thermischer Energie, so daß eine möglichst gute Angleichung an eine isothermische Expansion erzielt wird, welche bekanntlich im Vergleich zu einer polytropischen Expansion erhöhte spezifische Leistungen ermöglicht. Am Ausgang der letzten Maschine wird die Kohlensäure in einem entsprechenden Kondensator gekühlt und verflüssigt, um sodann wieder in den (ersten) Kessel gepumpt zu werden und den Kreislauf erneut zu durchlaufen. Kühlungen und Erwärmungen der Kohlensäure vor und hinter dem Kondensator erfolgen mit Hilfe von Wärmeaustauschern, welche die im Außenwasser enthaltene Energie ausnutzen.

Die Kühlanlage arbeitet mit Absorption von Ammoniak. Diese Anlage ermöglicht die Einstellung der am Kondensator geforderten Bedingungen bei möglichst geringen Temperatur- und Druckwerten, so daß eine Erhöhung der spezifischen Leistungsabgabe der Arbeitsmaschinen und eine Verminderung des Energiebedarfs zum Pumpen der Kohlensäure in die Kessel, entsprechend den sich bei niedrigeren Temperaturen ergebenden höheren Wichtenwerte, erzielt wird.

Zur Erwärmung der $H_2O/NH_3$-Lösung nutzt die Anlage die Energie, die dem (dampfförmigen) Wasser entnehmbar ist, welches entweder aus den oben erwähnten Schächtepaaren, oder aus anderen gleichartigen, jedoch von ersteren unabhängigen Schächtepaaren entstammt, die auch eine je nach Bedarf davon unterschiedliche Wasseraustrittstemperatur aufweisen können.

Die Absorptionskühlanlage befindet sich in vorteilhafter Weise an oder neben dem Ort, wo die leistungsabgebende Hauptanlage errichtet ist.

Wenn die Kühlanlage nicht vorgesehen ist, dann erfolgt die Kühlung und Verflüssigung der dampfförmigen $CO_2$ am Ausgang der letzten Maschine, unter Inkaufnahme eines verminderten Wirkungsgrades des Kraftwerkes, durch Wärmeaustausch mit dem Außenwasser.

Vorteilhafterweise ist auch eine an sich bekannte Abhitzerückgewinnungsanlage vorgesehen, welche sich zur Ausnutzung der niederwertigen Energie eignet, die noch im warmen Wasser am Ausgang der Hauptkraftanlage und/oder der Kühlanlage enthalten ist. Auf diese Weise läßt sich die Ausnutzung der aus den geothermischen Schächten herrührenden thermischen Energie bestens durchführen, indem Wasser mit möglichst niedrigem Energieniveau in den Untergrund gepumpt wird. Diese letztere Bedingung ist allerdings nicht ausschlaggebend, zumal eine vorteilhafte Lösung in vereinzelten Fällen auch darin bestehen könnte, die Temperaturdifferenz zwischen den Wassertemperaturen am Aus- und Eingang eines jeden Schächtepaares gezielt zu beschränken.

Anhand der beiliegenden Skizze ist nachstehend ein Ausführungsbeispiel für ein Wärmekraftwerk nach der vorliegenden Erfindung näher beschrieben, auf welches letztere selbstverständlich keineswegs beschränkt ist.

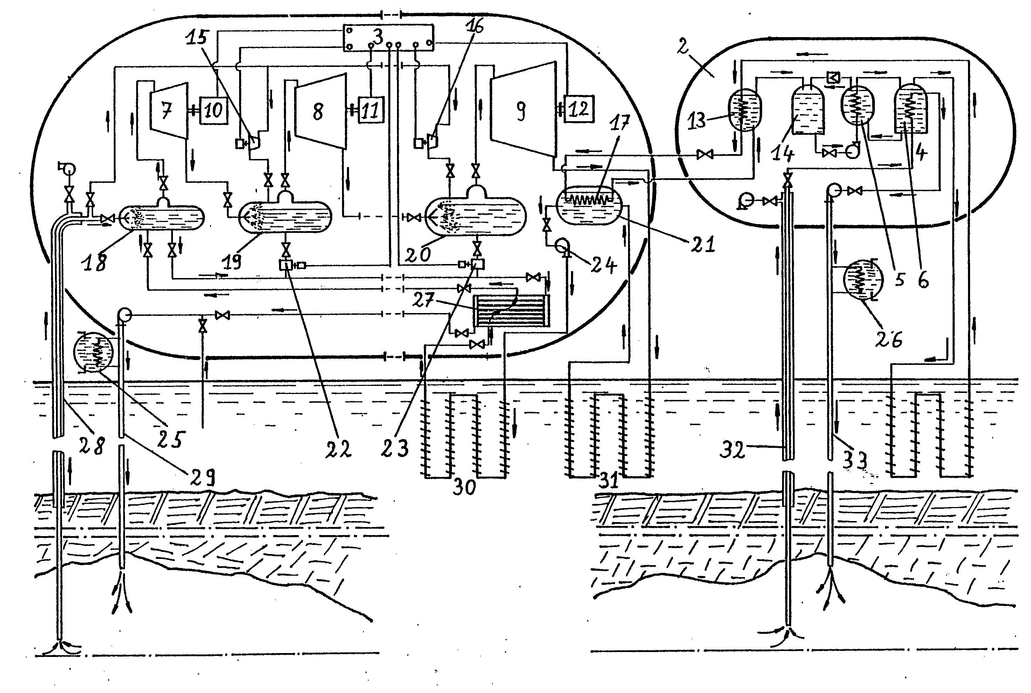

In diesem in der Zeichnung schematisch dargestellten Ausführungsbeispiel setzt sich die Kraftanlage im wesentlichen aus nachstehenden Bestandteilen zusammen:

— einem Schächtepaar (29, 28) zur Einführung von Wasser in den irdischen Untergrund und zu dessen Rückführung nach entsprechender Erhitzung;
— einer Anzahl von Kesseln (18, 19, 20) zur Erzeugung der dampfförmigen $CO_2$ für die leistungsabgebenden Maschinen, die im vorliegenden Beispiel, wie nachstehend angegeben, Turbinen sind;
— einer Anzahl von Turbinen (7, 8, 9), die mit elektrischen Generatoren (10, 11, 12) für die vom Kraftwerk geforderte Energieerzeugung verbunden sind;
— einer Anzahl von Pumpen (22, 23), durch welche das aus den Kesseln austretende Wasser in denjenigen Schacht gepumpt wird, der dieses Wasser in den Untergrund hineinführt;
— einer Anzahl von Wasserturbinen (15, 16) zur Rückgewinnung der überschüssigen Energie, die das Wasser am Eingang der Kessel besitzt;

— einem Kondensator (21), durch welchen die angestrebten thermodynamischen Bedingungen am Auslaß der letzten Turbine (9) herbeigeführt werden;

— einer Absorptionskühlanlage (2), die im wesentlichen folgende Bestandteile umfaßt:

— ein Schächtepaar (32, 33) zur Einführung von Wasser in den irdischen Untergrund und zu dessen Rückführung nach entsprechender Erhitzung, wobei dieses Schächtepaar gegebenenfalls auch mit den bereits erwähnten Schächtepaar (28, 29) identisch sein kann;

— einen Kessel (6) zur Wärmebehandlung der $NH_3/H_2O$-Lösung;

— einen im Kondensator (21) integrierten Verdampfer (17) zur Deckung des Kältebedarfs für die Behandlung der $CO_2$;

— einen Absorber (14) zur Wiederherstellung der in den Kessel (6) einzuführenden $NH_3/H_2O$-Lösung;

— die Gesamtanlage enthält schließlich eine Anzahl von Wärmeaustauschern (30, 31, 27, 4, 5, 13) für die Wärmebehandlung der $CO_2$ und des $NH_3$;

— eine Anzahl von Abhitzerückgewinnungsanlagen (25, 26) zur Rückgewinnung der im Auslaßwasser enthaltenen thermischen Energie;

— Eine Elektrizitätsverteilungsanlage (3).

Die Betriebsweise des Wärmekraftwerkes wickelt sich schematisch folgendermaßen ab:

Das über den Schacht (28) aus dem Untergrund herrührende Warmwasser wird mit dem passend gewählten Druck Pp und der Temperatur tp mittels Düsen in den Kessel (18) eingeführt, um dort entsprechend zerstäubt zu werden und die $CO_2$ zu erwärmen und verdampfen, welche ihrerseits mittels der Pumpe (24) vom Kondensator (21) zum Kessel (18) gepumpt wird.

Die in diesen Kessel erzeugte und im Kesseldom bei einer Temperatur ti1 < tp gesammelte dampfförmige $CO_2$ wird in die Turbine (7) eingelassen, um die dem Temperaturgefälle ti1 − tu1 entsprechende mechanische Leistung zu erzeugen.

Der Ausgangstemperatur tu1 entspricht ein Ausgangsdruck pu1. In der ersten Turbine erfolgt daher eine erste Umwandlung von thermischer Energie in mechanische Energie zwischen den Druckwerten Pp = Pi1 und Pu1 bzw. den Temperaturwerten ti1 und tu1.

Am Auslaß der Turbine (7) wird der Dampf mit dem Druck Pu1 und der Temperatur tu1 in den zweiten Kessel (19) eingelassen, wo dieser Dampf, wiederum mit Hilfe des vom Schacht (28) mit der Temperatur tu1 kommenden Warmwassers, bei konstanten Druck Pi2 von der Temperatur tu1 auf die Temperatur ti2 = ti1 erhitzt wird. Der Energieüberschuß im Wasser am Einlaß des Kessels (19), entsprechend dem höheren Druck (Pp > Pi2), ermöglicht eine Energierückgewinnung über die Wasserturbine (15). Der Entspannungsvorgang der $CO_2$ setzt sich jeweils mit Zwischenerhitzungen zwischen aufeinanderfolgenden Turbinen bis zur letzten Turbine (9) fort, an deren Auslaß die Temperatur und der Druck des Dampfes die Werte tun = tu1 bzw. Pun annehmen.

Die dampfförmige $CO_2$ wird sodann, nach vorangehender Vorkühlung im Außenwasser-Wärmeaustauscher (31), im Kondensator (21) behandelt, um dort bei einer Temperatur tuf verflüssigt zu werden, welche entsprechend den Eigenschaften der Kühlanlage vorbestimmt ist. Der im Kondensator herrschende Druck Puf ≤ Pum stellt sich entsprechend der Temperatur tuf bei der Dampf-Flüssigkeit-Zustandsänderung ein.

Vom Kondensator (21) wird die flüssige $CO_2$ mittels der Pumpe (24), wie bereits gesagt, in den Kessel (18) zurückgepumpt, wonach sich der Vorgang wiederholt.

Ein Wärmeaustauscher (30) und ein darauffolgender hinter dem Kondensator (21) angeordneter Wärmeaustauscher (27) ermöglichen eine Vorerwärmung der $CO_2$ vor deren Eintritt in den Kessel (18), unter Ausnutzung der dem Außenwasser bzw. dem über den Schacht (29) zum Untergrund fließenden Rückflußwasser entnehmbaren Energie.

Durch die Pumpen (22, 23) wird das aus den Kesseln (19, 20) austretende Wasser, wie bereits gesagt, wieder zum Untergrund zurückgefördert.

Ein dem erwähnten Schächtepaar (28, 29) analoges Schächtepaar (32, 33) ermöglicht im Untergrund eine Erhitzung des für den Betrieb der Absorptionskühlanlage (2) benötigten Wassers, wobei diese Kühlanlage den Kältebedarf für den Kondensator (21) deckt. Das Arbeitsprinzip der in der Figur dargestellten Absorptionskühlanlage ist konventioneller Art, so daß sich dessen nähere Erläuterung hier erübrigt.

Die Wasserrückflüsse aus den Kesseln (18, 19, 20) und aus der Kühlanlage (2) werden, bevor sie über die Schächte (29 bzw. 33) wieder in den Untergrund gelangen, dazu ausgenutzt, um eine entsprechende Außenwassermenge in den Kesseln (25 bzw. 26) für weitere Bedürfnisse zu erwärmen.

## Patentansprüche

1. Aus einer geothermischen Wärmequelle versorgtes Wärmekraftwerk, welches mit mindestens zwei Medien arbeitet, wobei das erste Medium (Wasser) über einen Eingangsschacht (29, 33) in den Untergrund gepumpt wird und nach entsprechender Erhitzung auf die vorgegebene Temperatur über einen Ausgangsschacht (28, 32) zurückfließt und die Übertragung der geothermischen Energie aus dem Untergrund zum Wärmekraftwerk ermöglicht, dadurch gekennzeichnet, daß das zweite Medium (Arbeitsmedium) Kohlensäure ist, die durch direkten Kontakt mit dem ersten Medium die darin enthaltene Wärmeenergie aufnimmt und diese über eine oder mehrere Arbeitsmaschinen (7, 8, 9) in mechanische Energie umwandelt.

2. Aus einer geothermischen Wärmequelle versorgtes Wärmekraftwerk, nach Anspruch 1, dadurch gekennzeichnet, daß ein drittes Medium (beispielsweise Ammoniak) in einer Absorptionskühlanlage (2) (wiederum unter Ausnutzung der geothermischen Energie) die zur Herabsetzung der Temperatur und damit des Druckes des zweiten Mediums am Auslaß der letzten Arbeitsmaschine (9) erforderliche Kälte erzeugt, so daß das vorbestimmte, optimale Druckgefälle zustande kommt.

3. Wärmekraftwerk nach Anspruch 1, dadurch gekennzeichnet, daß der Kontakt zwischen dem ersten und dem zweiten Medium durch Einspritzen von Wasser in die Kohlensäure entsteht.

4. Wärmekraftwerk nach Anspruch 1, dadurch gekennzeichnet, daß der Kontakt zwischen dem ersten und dem zweiten Medium durch Durchblasen von Wasser mit der Kohlensäure entsteht.

5. Wärmekraftwerk nach Anspruch 1, dadurch gekennzeichnet, daß das Schächtepaar (29, 28) für das erste Medium, das als Zwischenmedium für die Wärmebehandlung des zweiten Mediums dient, mit dem Schächtepaar (33, 32) für das erste Medium, das als Zwischenmedium für die Wärmebehandlung des dritten Mediums dient, identisch ist.

6. Wärmekraft nach Anspruch 1, wobei die leistungsabgebenden Maschinen derart hintereinander geschaltet sind, daß das aus jeder einzelnen Maschine austretende zweite Medium (Arbeitsmedium) nach Aufwärmung der folgenden Maschine zugeführt wird, dadurch gekennzeichnet, daß das aus der vorhergehenden Maschine in Form von Dampf austretende Arbeitsmedium vor Eintritt in die folgende Arbeitsmaschine in einen Kessel durch direkte Einspritzung von Wasser bis zur Eingangstemperatur aufgewärmt wird, in der Weise, daß jeweils Entspannungen mit vorzugsweise gleichen Temperaturgefällen und vorzugsweise gleichen Druckverhältnissen zwischen Eingangs- und Ausgangsdruck in jeder Maschine entstehen.

## Claims

1. A thermo-power station supplied by a geothermal heat source, which works with atleast two fluids, whereby the first fluid (water) is pumped into subsoil through a downcast well (29, 32) and after being heated to a pre-established temperature, via an outlet well (28, 32), returns and enables the geothermal energy to be transferred from the subsoil to the thermo-power-station, characterized by the fact that the second fluid is carbon dioxide, which through direct contact with the first fluid adsorbs the thermal energy contained in the latter andtransforms it into mechanical energy, via one or more working machines (7, 8, 9).

2. A thermo-power station supplied by a geothermal heat source, according to claim 1, characterized by the fact that a third fluid (for example ammonia) in an adsorption refrigerator plant (2), (again by utilizing geothermal energy) produces the refrigeration necessary for lowering the temperature and therefore the pressure of the second fluid at the outlet of the last working machine (9), so that the pre-established optimal pressure drop is obtined.

3. A thermo-power station in accordance with claim 1, characterized by the fact that contact between the first and second fluids is achieved by injecting water into carbon dioxide.

4. A thermo-power station in accordance with claim 1, characterized by fact that contact between the first and second fluids is achieved by blowing the carbon dioxide in the water.

5. A thermo-power station in accordance with claim 1, characterized by the fact that the pair of wells (28, 29) for the first fluid, which is used as an intermediate fluid for the thermal treatment of the second fluid, is the same pair of wells (33, 32) as that used for the first fluid, as an intermediate fluid for the thermal treatment of the third fluid.

6. A thermo-power station in accordance with claim 1, in which the power-generating machines are arranged in cascade to each other, in such a way that the second fluid (working fluid) leaving each of them, after heating, is adducted to the next machine, characterized by the fact that the working fluid leaving the preceeding machine in the form of vapour, before entering in the following working machine is heated in a boiler by direct injection of water up to an input temperature, in such a way that in every machine expansions with preferably identical temperature drops and preferably identical pressure conditions between input and output pressure in each machine are obtained.

## Revendications

1. Centrale thermique alimentée par une source de chaleur géothermique, qui travaille avec au moins deux médium, desquels le premier médium (eau) est pompé dans le substratum à travers un puits d'entrée (29, 33) et après un approprié chauffage à la température pré-établie, il reflue à travers un puits de sortie (28, 32) en rendant possible la transmission de l'énergie géothermique du substratum à ladite centrale thermique, caractérisée en ce que le deuxième médium (médium de travail) est de l'anhydride carbonique qui, par contact direct avec ledit premier médium, prend l'énergie calorifique que celui-ci contient et qu'à travers une ou plusieurs machines opératrices, il transforme en énergie mécanique.

2. Centrale thermique alimentée par une source de chaleur géothermique suivant la revendication 1, caractérisée en ce qu'un troisième médium (par exemple de l'ammoniaque), dans une installation à froid à absorption (2) (encore une fois en exploitant l'énergie géothermique), produit le froid nécessaire pour l'abaissement de la température et avec celle-ci de la pression dudit deuxième médium, à la sortie de la dernière machine opératrice (9), de manière à réaliser la chute de pression optimale, préétablie.

3. Centrale thermique suivant la revendication 1, caractérisée en ce que le contact entre le premier et le deuxième médium a lieu moyennant injection d'eau dans l'anhydride carbonique.

4. Centrale thermique suivant la revendication 1, caractérisée en ce que le contact entre le premier et le deuxième médium a lieu moyennant soufflage d'eau avec l'anhydride carbonique.

5. Centrale thermique suivant la revendication 1, caractérisée en ce que la paire de puits (29, 28) pour le premier médium, qui sert comme médium intermédiaire pour le traitement thermique du deuxième médium est identique à la paire de puits (33, 32) pour le premier médium, qui sert comme médium intermédiaire pour le traitement thermique du troisième médium.

6. Energie thermique suivant la revendication 1, où les machines de rendement de puissance sont reliées l'une après l'autre de manière que le deuxième médium (médium de travail) sortant dechaque machine est amené après chauffage à la machine suivante, caractérisée en ce que le médium de travail sortant de la machine précédente sous forme de vapeur, avant son entrée dans la machine opératrice suivante, est chauffé dans une chaudière par injection directe d'eau, jusqu'à la température d'entrée, de manière que les détentes ont lieu chaque fois avec, de préférence, chutes de température égales et, de préférence, avec rapports de pression égaux entre pression d'entrée et de sortie, dans chaque machine.